# FASCICULE DE BREVET EUROPEEN

(11) **EP 2 896 606 B1**
(45) Date de publication et mention de la délivrance du brevet: **17.08.2016**
(21) Numéro de dépôt: 14200307.8
(22) Date de dépôt: 24.12.2014
(51) Int. Cl.: C04B 35/571, C04B 35/626, C04B 35/628, C04B 35/80

(54) **PROCÉDÉ DE FABRICATION D'UNE PIÈCE EN MATÉRIAU COMPOSITE SICF/SIC À PARTIR D'UNE SUSPENSION COLLOIDALE**
HERSTELLUNGSVERFAHREN EINES BAUTEILS AUS SICF/SIC-VERBUNDMATERIAL AUF DER BASIS EINER KOLLOIDALEN SUSPENSION
METHOD FOR PRODUCING A PART MADE OF SICF/SIC COMPOSITE MATERIAL FROM A COLLOIDAL SUSPENSION

(30) Priorité: 27.12.2013 FR 1363659
(43) Date de publication de la demande: 22.07.2015
(73) Titulaire: Commissariat à l'Énergie Atomique et aux Énergies Alternatives, 75015 Paris (FR)
(72) Inventeur: Teyssier, Laurent, 92190 Meudon (FR)
(74) Mandataire: Brevalex

(56) Documents cités:
- EP-A1- 1 364 929
- US-A- 5 632 834
- US-A1- 2003 137 084
- US-A1- 2004 113 332
- DONG S ET AL: "Processing optimization and mechanical evaluation of hot pressed 2D Tyranno-SA/SiC composites", JOURNAL OF THE EUROPEAN CERAMIC SOCIETY, ELSEVIER SCIENCE PUBLISHERS, BARKING, ESSEX, GB, vol. 23, no. 8, 1 juillet 2003 (2003-07-01), pages 1223-1231, XP004409238, ISSN: 0955-2219, DOI: 10.1016/S0955-2219(02)00298-4
- SAA NOVAK ET AL: "Fabrication of SiC/SiC composites by SITE-P process", JOURNAL OF NUCLEAR MATERIALS, ELSEVIER BV, NL, vol. 427, no. 1, 18 avril 2012 (2012-04-18), pages 110-115, XP028497530, ISSN: 0022-3115, DOI: 10.1016/J.JNUCMAT.2012.04.023 [extrait le 2012-04-26]
- NOVAK S ET AL: "Electrophoretic deposition in the production of SiC/SiC composites for fusion reactor applications", JOURNAL OF THE EUROPEAN CERAMIC SOCIETY, ELSEVIER SCIENCE PUBLISHERS, BARKING, ESSEX, GB, vol. 28, no. 14, 1 octobre 2008 (2008-10-01), pages 2801-2807, XP023610760, ISSN: 0955-2219, DOI: 10.1016/J.JEURCERAMSOC.2008.04.004 [extrait le 2008-06-02]
- PARK JI YEON ET AL: "Characterization of slurry infiltrated SiCf/SiC prepared by electrophoretic deposition", JOURNAL OF NUCLEAR MATERIALS, vol. 442, no. 1, 4 mai 2013 (2013-05-04), XP028727101, ISSN: 0022-3115, DOI: 10.1016/J.JNUCMAT.2013.04.074

## Description

### DOMAINE TECHNIQUE

La présente invention se rapporte au domaine des composites à matrice céramique (CMC), et plus particulièrement aux matériaux composites SiC_{f}/SiC, qui sont des matériaux à matrice céramique de carbure de silicium renforcée par des fibres de carbure de silicium.

L'invention se rapporte plus particulièrement à un procédé de fabrication d'une pièce en un matériau composite SiC_{f}/SiC.

L'invention est susceptible d'être utilisée dans de nombreux domaines et est particulièrement utile pour les applications à hautes températures (de 600 à 1000°C) et à très hautes températures (de 1000 à 1600°C). L'invention est notamment susceptible d'être utilisée pour la réalisation d'échangeurs thermiques ou de turbines à gaz haute température. Elle peut aussi être utilisée pour la réalisation de matériaux de structures et de gaines de combustible pour les réacteurs nucléaires, et en particulier pour la réalisation des réacteurs de 4^{ème} génération. Elle peut également être utilisée dans l'aéronautique et l'aérospatiale pour la réalisation de tuyères, d'aubes de turbine, de volets et, de manière générale, de toutes pièces chaudes des réacteurs.

### ÉTAT DE LA TECHNIQUE ANTÉRIEURE

A l'heure actuelle, il existe de nombreux procédés de fabrication de composites SiC_{f}/SiC.

L'infiltration chimique en phase vapeur (CVI pour « Chemical Vapor Infiltration » en anglais) d'une préforme est un procédé lent et coûteux. En outre, le composite ainsi obtenu présente, au mieux, une porosité résiduelle de 15 % environ.

L'imprégnation de polymère et pyrolyse (PIP pour « Polymer Impregnation and Pyrolysis » en anglais) est lui aussi un procédé lent. En effet, il nécessite un nombre élevé de cycles imprégnation/pyrolyse pour obtenir un composite présentant une densité de 85 %.

Le procédé NITE (acronyme de « Nano-Infiltration and Transient Eutectics » en anglais) (document **[1])** est basé sur l'infiltration d'une préforme par une suspension comprenant une nanopoudre de SiC, en présence de composés d'aide au frittage (Al₂O₃, Y₂O₃), suivie d'une densification à une température d'environ 1780°C sous une pression comprise entre 150 et 200 bars. L'inconvénient de cette technique est que la présence de phases secondaires oxydes limite la conductivité thermique et augmente l'activité neutronique du matériau ainsi élaboré.

Le procédé SITE (acronyme de « Slip Infiltration and Transient Eutectics » en anglais) (document **[2])** se rapproche du procédé NITE, à la différence que l'infiltration de nanopoudre de SiC est effectuée par électrophorèse et des composés d'aide au frittage sont ensuite imprégnés en phase liquide. La densification du composite se fait à 1400°C sous argon. L'inconvénient de cette technique est, comme dans le cas du procédé NITE, la présence de phases oxydes secondaires qui sont néfastes à des propriétés thermomécaniques optimales des composites ainsi élaborés.

Enfin, le procédé SITE-P (document **[3]),** qui est une variante du procédé SITE, consiste en une infiltration de nanopoudre de SiC par électrophorèse, suivie de l'imprégnation (réalisée sous vide) d'un polymère précéramique, précurseur de SiC. La densification du composite est obtenue par pyrolyse du polymère précéramique à 1600°C, qui se décompose en SiC. La densité atteinte après une imprégnation est égale à 67% de la densité théorique. Six imprégnations sont nécessaires pour atteindre une densité relative satisfaisante (86,5%), ainsi qu'une bonne conductivité thermique (60 W/m.K à température ambiante). La porosité résiduelle dans le composite après six imprégnations est de 14%.

La référence 3 montre un procédé contenant les étapes de fabrication d'une préforme poreuse de fibres de SiC, la préparation d'une dispersion colloïdale comprenant des particules de SiC submicroniques, l'infiltration de la préforme avec la dispersion colloïdale par électrophorèse, le traitement thermique à 1600°C, l'infiltration avec un précurseur liquide de SiC (polycarbosilane) et le pyrolyse à 850°C.

La porosité résiduelle présente dans les composites SiC_{f}/SiC, inhérente aux procédés de fabrication décrits ci-dessus, est nocive à la conductivité thermique des composites. En outre, la conductivité thermique d'un matériau diminue lorsque la température augmente. On constate donc qu'il est important de réduire au maximum la porosité résiduelle des composites SiC_{f}/SiC, en particulier s'ils doivent pouvoir être utilisables à hautes températures, voire à très hautes températures. L'inventeur s'est donc fixé pour objectif de concevoir un procédé de fabrication d'un composite SiC_{f}/SiC qui soit plus rapide, plus simple et moins coûteux à mettre en oeuvre que les procédés de l'art antérieur, tout en permettant de diminuer la porosité résiduelle des composites SiC_{f}/SiC.

### EXPOSÉ DE L'INVENTION

Cet objectif est atteint grâce à un procédé de fabrication d'une pièce en matériau composite à matrice céramique du type SiC_{f}/SiC qui comprend un renfort fibreux SiC densifié par une matrice SiC, le procédé comprenant successivement :
a) une mise en contact d'une préforme de la pièce à fabriquer avec une dispersion colloïdale, la préforme comprenant des fibres de SiC et la dispersion colloïdale comprenant des particules de SiC de tailles submicrométriques ou nanométriques, dispersées dans au moins un solvant, et un précurseur liquide de céramique SiC ;
b) une infiltration, par électrophorèse, des particules de SiC et du précurseur de céramique SiC contenus dans la dispersion colloïdale, dans la préforme ;
c) une densification de la préforme infiltrée par traitement thermique pour décomposer le précurseur de céramique en céramique SiC, moyennant quoi on obtient la pièce en matériau composite à matrice céramique.

Cette manière de procéder permet d'améliorer la qualité de l'infiltration électrophorétique de la poudre de SiC dans les torons (ensemble de fibres).

Pour réaliser l'électrophorèse, on applique, de manière connue en soi, un champ électrique dans la suspension. Les particules chargées de SiC vont alors se déplacer vers et infiltrer (c'est-à-dire combler la porosité) le renfort fibreux SiC (plaque ou tissu de fibres), qui est utilisé comme électrode. Le précurseur de céramique va lui aussi se déplacer vers et infiltrer le renfort fibreux et, sous l'action d'un traitement thermique, de préférence une pyrolyse, le précurseur va se décomposer en SiC et ainsi densifier encore un peu plus le composite.

Dans ce qui précède et ce qui suit, on entend par « dispersion colloïdale » une suspension liquide dans laquelle sont dispersées des particules solides (en l'occurrence des particules de SiC) dont la taille est inférieure à 1 µm.

Dans ce qui précède et ce qui suit, le terme « taille », appliqué à des particules désigne la plus grande dimension de ces particules ; le terme « nanométrique » signifie supérieur ou égal à 1 nanomètre et inférieur ou égal à 100 nanomètres ; le terme « submicrométrique » signifie supérieur à 100 nanomètres et inférieur à 1000 nanomètres.

On rappelle par ailleurs que le terme « particule » désigne un élément dont le rapport entre sa plus grande dimension et sa plus petite dimension est compris entre 1 et 1,2.

La taille des particules (granulométrie) est choisie en fonction des interstices caractéristiques du renfort fibreux. La poudre de céramique est composée de particules ayant un diamètre entre 5 et 10 fois plus petit que la taille des interstices du renfort.

De préférence, le ou les solvants utilisés pour réaliser la dispersion colloïdale sont des solvants non aqueux. En effet, bien que l'eau ait l'avantage d'être écologique et d'avoir une constante diélectrique élevée (ce qui est bénéfique pour la mobilité électrophorétique), elle est déconseillée du fait de la réaction d'autoprotolyse de l'eau qui a lieu aux électrodes au cours de l'électrophorèse, ce qui conduit à la formation de bulles qui peuvent perturber la densification de la préforme.

Le précurseur liquide de céramique SiC est un polymère précéramique, qui se transforme en SiC par pyrolyse. De préférence, il s'agit de l'allylhydridopolycarbosilane ou AHPCS.

Avantageusement, le procédé comprend la préparation de la dispersion colloïdale.

Selon une première variante du procédé, la préparation de la dispersion colloïdale comprend successivement :
- la dispersion des particules de SiC dans un solvant dans lequel les particules de SiC sont dispersibles et dans lequel le précurseur liquide est soluble ; et
- la solubilisation du précurseur liquide dans ledit solvant.

Selon une seconde variante du procédé, la préparation de la dispersion colloïdale comprend successivement :
- la dispersion des particules de SiC dans un mélange de deux solvants miscibles : un premier solvant dans lequel les particules de SiC sont dispersibles, et un deuxième solvant dans lequel le précurseur liquide est soluble ;
- la solubilisation du précurseur liquide dans le mélange de solvants comprenant les particules de SiC. Avantageusement, le premier solvant est l'éthanol et le second solvant est le toluène, les premier et deuxième solvants étant dans des proportions 55/45 en volume.

Cette seconde variante est utile lorsque le précurseur céramique n'est pas soluble dans le solvant utilisé pour disperser les particules de SiC. Dans ce cas, on préfère utiliser un mélange d'éthanol et de toluène. L'éthanol est un solvant organique classique pour réaliser des infiltrations électrophorétiques, qui permet une bonne dispersion du SiC du fait de sa constante diélectrique élevée. Le toluène, quant à lui, est utilisé pour solubiliser le précurseur céramique. Il a fallu trouver la bonne proportion de toluène à ajouter à l'éthanol, afin d'avoir la plus grosse proportion d'éthanol dans le mélange tout en garantissant une bonne solubilisation du précurseur céramique. Après différents tests, il s'est avéré qu'il était préférable d'avoir au moins 45 % en volume de toluène pour bien dissoudre le précurseur céramique. On pourrait augmenter cette proportion de toluène, mais cela diminuerait l'efficacité de l'infiltration : le toluène a une constante diélectrique plus faible que l'éthanol, donc la migration électrophorétique des particules diminue lorsque la proportion en toluène augmente. Les proportions préférées de l'éthanol et du toluène dans le mélange sont donc 55/45 en volume.

Avantageusement, la dispersion des particules de SiC dans le solvant dans lequel les particules de SiC sont dispersibles comprend :
- l'introduction, sous agitation, de tout ou partie des particules de SiC dans ledit solvant ;
- l'arrêt de l'agitation et l'application d'ultrasons audit solvant comprenant les particules de SiC ; et éventuellement
- l'arrêt des ultrasons et l'application d'une agitation magnétique audit solvant comprenant les particules de SiC ;
et, s'il reste des particules de SiC à introduire dans le solvant, la répétition une ou plusieurs fois de l'enchainement des opérations ci-dessus. Les opérations sont ainsi répétées jusqu'à ce que la totalité des particules de SiC ait été introduite dans le solvant. De préférence, l'introduction des particules de SiC se fait en deux fois.

Avantageusement, la solubilisation du précurseur liquide dans le solvant dans lequel le précurseur liquide est soluble comprend :
- l'introduction, sous agitation, de tout ou partie du précurseur liquide dans ledit solvant ;
- l'arrêt de l'agitation et l'application d'ultrasons audit solvant ; et éventuellement
- l'arrêt des ultrasons et l'application d'une agitation magnétique audit solvant ;
et, s'il reste du précurseur liquide à introduire dans le solvant, la répétition une ou plusieurs fois de l'enchainement des opérations ci-dessus.

De préférence, pour les étapes de dispersion et du solubilisation, l'application d'ultrasons est réalisée pendant une durée comprise entre 1 et 10 minutes, de préférence 5 minutes, à une puissance comprise entre 170 et 310 W et l'éventuelle application d'une agitation magnétique est réalisée en appliquant une vitesse d'agitation comprise entre 300 et 600 tours/minute pendant une durée comprise entre 30 et 90 minutes, de préférence à température ambiante.

L'application des ultrasons permet une bonne désagrégation des amas de particules de SiC dans la suspension. L'application des ultrasons est limitée à 10 minutes, car ils produisent un dégagement de chaleur qui pourrait, s'il était maintenu plus longtemps, provoquer l'évaporation du ou des solvants de la dispersion. De même, l'application de l'agitation magnétique est de préférence réalisée à température ambiante (18 à 25°C) afin d'éviter l'évaporation du ou des solvants de la dispersion. En appliquant une vitesse d'agitation comprise entre 300 et 600 tours/minute, on obtient un vortex suffisant au sein de la suspension qui, au bout d'une durée d'agitation comprise entre 30 et 90 min, permet d'obtenir une meilleure viscosité de la dispersion.

Avantageusement, la dispersion colloïdale comprend, en pourcentages massiques rapportés à la masse totale de la dispersion, 40 à 60% de particules de SiC, de préférence 50 à 55%. Il est bien connu de la littérature que, plus la concentration initiale en poudre dans une dispersion est élevée, plus l'infiltration électrophorétique est efficace. Cependant, plus la teneur en poudre est élevée, et plus le potentiel zeta diminue (il est de plus en plus difficile de stabiliser une dispersion avec une teneur croissante en poudre). Une teneur de SiC comprise entre 40 à 60% en poids, de préférence 50 à 55%, est un bon compromis : c'est une teneur relativement élevée, avec un bon potentiel zeta (> 50 mV), ce qui laisse de la marge pour ajouter le précurseur céramique dans la dispersion sans obtenir un potentiel zeta catastrophique. A titre d'exemple, une dispersion comprenant 50% en poids de SiC a un potentiel zeta supérieur à 50 mV et, après ajout du polymère, le potentiel zeta est typiquement entre 20 et 30 mV, ce qui reste correct.

La dispersion colloïdale peut comprendre, outre les particules de SiC, le précurseur liquide de céramique et au moins un solvant, un dispersant et/ou un liant.

L'ajout d'un liant permet notamment d'améliorer la qualité du revêtement en surface du composite, la qualité étant améliorée en optimisant la quantité du liant.

Le dispersant est un composé qui va réagir à la surface des particules de SiC, afin de créer des phénomènes de répulsions électro-stériques entre les particules. Les polymères sont généralement de bons dispersants car ils fournissent une répulsion stérique entre les particules (en plus de la répulsion électrique) ; on a donc une répulsion qui est meilleure, ce qui a pour effet que la stabilisation de la suspension est, elle aussi, meilleure.

Le dispersant est choisi parmi les dispersants connus, par exemple l'huile de menhaden, l'hypermer^{®} KD1 commercialisé par la société ICI Americas, Inc., le polyvinylpyrrolidone ou l'hydroxyde de tétraméthylammonium (TMAH). De préférence, on utilise le polyéthylènimine comme dispersant, car il permet de bonnes répulsions électro-stériques (électrostatiques et stériques). Le liant est quant à lui choisi parmi les liants conventionnellement utilisés au cours de la préparation d'une dispersion colloïdale, par exemple le polyvinylbutyral, le polyvinylpyrrolidone ou l'alcool polyvinylique.

Avantageusement, l'étape b) d'infiltration par électrophorèse comprend l'application d'une tension entre 10 et 100 V/cm pendant une durée allant de 1 à 10 minutes.

Avantageusement, le procédé objet de l'invention comprend en outre, avant l'étape a), une étape de mise en contact, par exemple par trempage, de la préforme avec ledit au moins un solvant de la dispersion colloïdale pendant au moins 12 heures. Cette étape permet d'améliorer la mouillabilité de la préforme, ce qui permet au final d'améliorer l'infiltration électrophorétique.

Avantageusement, l'étape c) de densification par traitement thermique comprend une pyrolyse réalisée à une température comprise entre 1400 et 1700°C et pendant une durée comprise entre 1 et 3 heures.

Préférentiellement, la température de pyrolyse est atteinte en chauffant la préforme infiltrée à une vitesse comprise entre 0,5°C/min et 4°C/min.

Selon un mode de réalisation préféré, la pyrolyse est réalisée à une température de 1600°C, la température de pyrolyse étant atteinte en chauffant la préforme infiltrée à une vitesse de 1°C/min.

Le procédé objet de l'invention peut comprendre, entre l'étape b) d'infiltration et l'étape c) de densification, une étape de séchage de la préforme infiltrée. Cette étape de séchage permet d'évacuer le ou les solvants provenant de la suspension.

Selon une variante avantageuse du procédé, il est possible d'augmenter une durée de l'étape d'infiltration de manière à obtenir un revêtement en surface du renfort. L'épaisseur du revêtement dépend de la durée de la phase électrophorétique du procédé.

En mettant en oeuvre le procédé objet de l'invention, on peut obtenir une pièce en matériau composite à matrice céramique du type SiC/SiC. Cette pièce peut, par exemple, être une gaine combustible. En effet, le composite ainsi formé a l'avantage de présenter une conductivité thermique supérieure à 10 W/m.K aux températures de fonctionnement (600 à 1000°C).

### BRÈVE DESCRIPTION DES DESSINS

La figure 1 représente un schéma du montage utilisé pour procéder à l'étape électrophorétique du procédé objet de l'invention.
Les figures 2a et 2b sont des clichés obtenus par microscopie optique d'un composite SiC_{f}/SiC, selon une vue en coupe, élaboré selon le procédé objet de l'invention.
La figure 3 est un cliché d'un composite SiC_{f}/SiC ayant un revêtement de SiC élaboré selon le procédé objet de l'invention.

### EXPOSÉ DÉTAILLÉ D'UN MODE DE RÉALISATION PARTICULIER

**Le** composite SiC_{f}/SiC réalisé selon le procédé objet de l'invention permet la réalisation de pièces en composite pouvant être utilisées dans de nombreux domaines d'application.

De manière connue en soi, pour obtenir une pièce d'une forme particulière, on adapte la forme du renfort (plaque, tissu, etc.) en fonction de la forme de la pièce que l'on souhaite obtenir, avant de procéder à l'infiltration du renfort. Le renfort, quant à lui, est réalisé par tressage ou tissage de fibres, également appelées torons, chaque fibre étant formées de plusieurs fils.

Les applications potentielles de l'invention sont les matériaux pour les réacteurs de 4^{ème} génération (fission) et également pour les réacteurs à fusion. Les matériaux SiC_{f}/SiC réalisés selon le procédé objet de l'invention sont par exemple envisagés comme matériau de structure du tube hexagonale d'un réacteur RNR-Na (réacteur à neutrons rapides refroidi au sodium) et comme gaine combustible d'un réacteur RNR-He (réacteur à neutrons rapides refroidi à l'hélium).

Les composites SiC_{f}/SiC présentant d'excellentes propriétés thermomécaniques à hautes températures, le procédé objet de l'invention peut également être utilisé pour élaborer des matériaux pour l'aérospatiale (pièces d'avions, navettes spatiales, fusées, etc.).

Le procédé de fabrication qui se rapproche le plus du procédé objet de l'invention est le procédé SITE-P, qui permet la fabrication de composites SiC_{f}/SiC par électrophorèse et qui comporte trois étapes principales distinctes et successives, à savoir :
i) une infiltration d'une préforme de fibres de SiC par électrophorèse d'une poudre de SiC se présentant sous la forme d'une dispersion colloïdale ;
ii) une imprégnation, réalisée sous vide, du polymère précéramique ;
iii) une densification du matériau obtenu à l'issue de l'étape ii) par pyrolyse du polymère imprégné (T > 1400°C).

Le procédé objet de l'invention se démarque du procédé SITE-P en ce que l'étape d'infiltration du SiC et l'étape d'imprégnation du polymère précéramique sont réalisées simultanément. D'autre part, l'étape d'imprégnation n'a pas besoin d'être réalisée sous vide, ce qui a pour avantage de simplifier le dispositif expérimental requis et diminue la durée du procédé de fabrication du composite.

Contrairement à ce que l'on pourrait penser, il n'était pas évident, pour un homme du métier, de combiner les étapes d'infiltration électrophorétique et d'imprégnation du procédé SITE-P pour parvenir au procédé objet de l'invention.

En effet, afin de réaliser l'imprégnation du polymère précéramique en même temps que l'infiltration électrophorétique de la poudre de SiC, le polymère est inclus dans la formulation de la dispersion colloïdale de SiC qui est utilisée pour l'électrophorèse. Or, lorsqu'on réalise une dispersion colloïdale, on cherche généralement à ce qu'elle soit la plus stable possible, c'est-à-dire que les particules qu'elle contient soient les plus mobiles possibles.

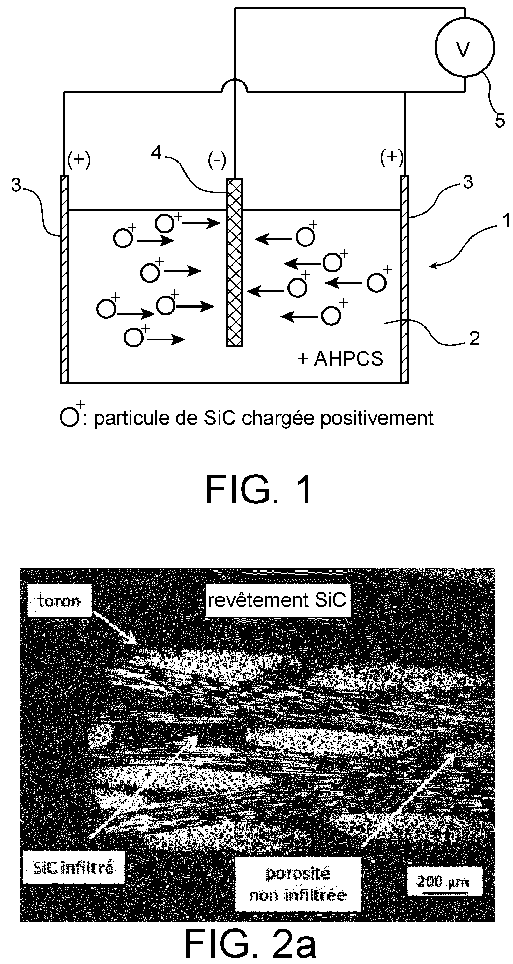

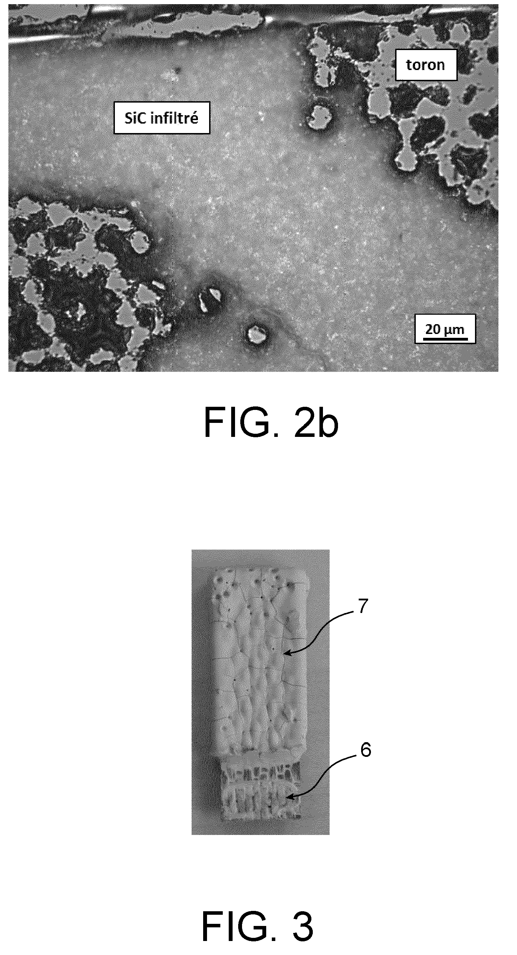

Dans la littérature, il est généralement admis qu'une dispersion colloïdale est stable lorsque son potentiel zeta est au minimum de 30 mV (document **[4]).** Or, en ajoutant le précurseur précéramique (qui est ici un polymère) dans la dispersion colloïdale, on déstabilise fortement la dispersion. A titre d'illustration, dans l'exemple de réalisation qui sera décrit en détail ci-après, une dispersion colloïdale contenant 50% en poids d'une poudre de SiC dans un mélange EtOH/Toluène avec 1,2 mg de dispersant par m² de surface spécifique de SiC (1,2 mg/m²_{SiC}) présente, avant l'ajout du polymère précéramique, un potentiel zeta égal à environ 58 mV (la suspension est donc très stable). Après l'ajout de 4 g de polymère dans la suspension, cette valeur chute à 26 mV, soit une valeur inférieure à 30 mV qui est, dans l'art antérieur, considéré comme étant la valeur limite de stabilité des suspensions colloïdales. Or, de manière étonnante et malgré le potentiel zeta inférieur à la valeur limite de 30 mV, on obtient avec le procédé objet de l'invention une infiltration de très bonne qualité, comme le montrent les clichés des figures 2a et 2b qui seront discutées plus en détails ci-dessous.

Pour illustrer le procédé objet de l'invention, nous allons à présent décrire en détails un exemple de fabrication d'un composite SiC_{f}/SiC selon l'invention.

### a) élaboration de la dispersion colloïdale. de SiC :

On commence par dissoudre un dispersant dans un solvant adéquat en agitant le mélange, par exemple à l'aide d'ultra-sons.

Le dispersant utilisé est un polymère qui va réagir à la surface des particules de SiC, afin de créer des phénomènes de répulsions électro-stériques entre les particules, menant ainsi à la stabilisation de la suspension colloïdale.

Dans notre exemple de réalisation, on choisit de dissoudre environ 1 mg de polyéthylènimine (PEI) par m² de surface spécifique de SiC dans de l'éthanol absolu (EtOH).

L'éthanol est le solvant le plus utilisé dans les procédés électrophorétique non-aqueux ; le dispersant PEI est, quant à lui, très utilisé dans les procédés électrophorétiques, mais tout autre dispersant permettant une bonne stabilisation de la suspension (c'est-à-dire permettant d'obtenir une dispersion présentant un potentiel zeta d'au moins 20 mV, et de préférence d'au moins 30 mV) pourrait également convenir.

Le précurseur de céramique que l'on envisage d'utiliser est un polymère précéramique, l'allylhydridopolycarbosilane ou AHPCS, commercialisé par la société Starfire Systems sous la référence SMP-10.

Ce polymère précéramique n'étant pas soluble dans l'éthanol, on ajoute un deuxième solvant au mélange PEI/EtOH, ce solvant étant choisi de manière à ce que le polymère y soit soluble. Selon le fournisseur, le polymère AHPCS n'est soluble que dans les hexanes, le toluène et le tétrahydrofurane (THF). Tous ces solvants pourraient donc convenir, mais il est préférable d'utiliser le toluène, l'inventeur ayant réalisé des études de mouillabilité et le toluène s'étant avéré être le solvant le plus adéquat (le plus mouillant) pour solubiliser le polymère AHPCS.

Le deuxième solvant ajouté au mélange est donc le toluène et il est ajouté de manière à ce que le mélange EtOH/Toluène soit dans des proportions d'environ 55/45 en pourcentage volumique.

On ajoute progressivement 50% en poids d'une poudre de SiC submicronique (taille de particules 0,9 µm) (référence Sintex 10C de chez Saint-Gobain) à la suspension sous agitation (par exemple, une agitation magnétique). L'agitation permet de rendre la suspension homogène.

La poudre de SiC est une charge (« filler » en anglais) passive, permettant, d'une part, de limiter le phénomène de retrait ayant lieu lors des étapes de séchage et de pyrolyse, et d'autre part, de promouvoir la croissance cristalline du SiC (et plus particulièrement du bêta siliciure de carbone (β-SiC)) issu de la pyrolyse du polymère précéramique pendant l'étape de pyrolyse.

Quelques gouttes d'acide acétique (CH₃COOH) sont ajoutées à la suspension afin d'avoir un pH d'environ 9. Le pH est un paramètre très important dans les suspensions colloïdales. En effet, pour avoir une mobilité électrophorétique maximale, les particules doivent développer un maximum de charges à leur surface, ce qui est possible en se plaçant à un pH assez éloigné du pH du point iso-électrique (PIE) du matériau des particules SiC, c'est-à-dire le pH pour lequel le matériau présente un pouvoir électrique neutre. Les expériences réalisées par l'inventeur ont montré qu'il était préférable de se placer à un pH situé entre 8,9 et 9. Ces expériences ont également permis de montrer qu'il est préférable d'éviter d'utiliser certains acides, comme l'acide chlorhydrique, qui conduisent à la formation de bulles dans la matrice du composite.

La suspension ainsi obtenue est ensuite mélangée à l'aide d'une pointe à ultrasons (par exemple une pointe à ultrasons de la marque IKA) pendant 4 minutes à 40% de la puissance maximale de l'appareil (qui est de 600 W/cm²) afin de bien homogénéiser la suspension.

En pratique, il est préférable de réaliser l'ajout du SiC en deux fois, avec ajout d'acide acétique et traitement ultrasonique intermédiaires, afin d'éviter que la suspension ne devienne trop visqueuse.

La suspension est ensuite mélangée sous agitation magnétique pendant au moins 1 heure, ce qui permet de fluidifier légèrement la suspension.

Le polymère précéramique (AHPCS) est alors ajouté à la suspension, dans des proportions allant de 2 à 6 g d'AHPCS pour 40 ml de suspension.

La suspension est une nouvelle fois traitée par des ultrasons à l'aide d'une pointe à ultrasons pendant 4 minutes à 40% de sa puissance maximale. A ce stade, il faut veiller à ce que la chaleur dégagée par le traitement ultrasonique ne fasse pas figer la suspension.

La suspension est à nouveau mélangée sous agitation magnétique pendant au moins 1 heure.

La qualité de la suspension colloïdale ainsi obtenue peut être caractérisée en termes de viscosité et de stabilité.

Pour mesurer la viscosité, on utilise par exemple un rhéomètre Brookfield DV-II+, en mesurant la viscosité de la dispersion colloïdale pour différents taux de cisaillement.

Pour mesurer la stabilité, on peut réaliser la mesure du potentiel zeta à l'aide d'un dispositif « ZetaProbe » de Colloidal Dynamics : plus le potentiel zeta de la suspension sera élevé, plus la suspension sera stable.

Dans le cadre de la présente invention, la dispersion colloïdale utilisée pour réaliser l'électrophorèse a une viscosité la plus faible possible, inférieure à 75 cp pour un taux de cisaillement de 20 s⁻¹, de préférence inférieure à 30 cp (0,03 Pa.s), et un potentiel zeta d'au moins 20 mV.

La dispersion colloïdale est alors prête pour réaliser l'électrophorèse.

### b) électrophorèse :

Le schéma du montage utilisé pour réaliser l'électrophorèse est illustré dans la figure 1. Il comprend une cuve 1, destinée à contenir la dispersion colloïdale 2, deux contre-électrodes 3, disposées sur deux parois opposées de la cuve, une électrode de travail, constituée par la préforme fibreuse 4 en SiC à infiltrer, et un générateur de tension 5 reliant les électrodes.

La présence des deux contre-électrodes, placées de part et d'autre de l'électrode de travail, permet une infiltration simultanée des deux côtés de la préforme fibreuse en SiC.

Dans notre exemple de réalisation, on utilise une préforme fibreuse qui a été élaborée au laboratoire à partir de fibres de SiC Hi-Nicalon de type S (fabriquées par la société Nippon Carbon Co.) selon un tissage interlock 2,5D. L'épaisseur de l'interphase de pyrocarbone (PyC) est de 30 nm. Le diamètre des fibres est d'environ 8 µm. Le tissu de fibres SiC ainsi obtenu a une épaisseur comprise entre 1 et 2 nm, une largeur d'environ 1 cm et une longueur d'environ 3 cm, et présente un volume de porosité compris entre 30 et 45%.

Avant d'installer la préforme fibreuse dans la cuve, elle est mise à tremper dans de l'éthanol absolu (solvant principal de la dispersion colloïdale) pendant une journée. Régulièrement, un traitement ultrasonique d'une quinzaine de minutes est appliqué afin d'éliminer les bulles d'air présentes dans le renfort. Ces différentes étapes préparatoires permettent d'améliorer la mouillabilité de la préforme, afin d'obtenir une infiltration électrophorétique maximale.

On verse la dispersion colloïdale dans la cuve afin que les contre-électrodes soient au moins partiellement immergées, puis la préforme fibreuse est lentement plongée dans la dispersion colloïdale.

Une fois en place, on applique une tension entre les contre-électrodes et l'électrode de travail pendant une durée allant de 1 à 10 minutes. Les tensions appliquées sont en général comprises entre 10 et 100 V/cm. Des tensions plus élevées sont possibles, mais cela conduit à une infiltration de moins bonne qualité.

Sous l'action du champ électrique, les particules chargées de SiC présentes dans la dispersion-colloïdale vont se déplacer vers la préforme de fibres de SiC, qui forme l'électrode de travail, et, dans le même temps, les molécules de polymère AHPCS, qui sont bien dissoutes dans la suspension, vont imprégner la préforme. On suppose que cette imprégnation est favorisée par le déplacement des particules de SiC, celles-ci entraînant avec elles une certaine quantité d'AHPCS à l'intérieur de la préforme.

### c) densification du composite :

La densification du composite est obtenue par pyrolyse du polymère précéramique, qui a été imprégné dans le renfort fibreux SiC lors de l'électrophorèse et qui joue le rôle de précurseur de SiC.

Cette pyrolyse est réalisée dans un four chauffé jusqu'à 1600°C sous argon. En pratique, on peut également réaliser une première pyrolyse jusqu'à 1000°C sous balayage d'argon (P ^{∼} Pₐₜₘ) dans un premierfouren appliquant une rampe de températures de 1°C/min jusqu'à 1000°C et un palier de 2 heures à 1000°C et une deuxième pyrolyse à 1600°C dans un autre four (plus précis à hautes températures), dans lequel on applique une rampe de température de 3,33°C/min jusqu'à 1600°C, avec un palier de 2 h à 1600°C.

La qualité de l'infiltration et de l'imprégnation est ensuite vérifiée par microscopie optique et par microscopie électronique à balayage, ainsi que par des mesures de densité par pycnométrie Hélium.

Le composite SiC_{f}/SiC élaboré selon le procédé décrit ci-dessus présente une porosité résiduelle de 26 % (soit un composite ayant une densité de 74%).

Les clichés de ce composite SiC_{f}/SiC obtenus par microscopie optique sont représentés dans la figure 2a (grossissement x 50) et la figure 2b (grossissement x 500, correspondant à un grossissement x 10 d'une partie de la figure 2a).

On constate dans ces clichés que le SiC infiltre quasi-totalement la porosité inter-toron du renfort fibreux, mais qu'il n'a pas totalement infiltré la porosité intra-toron (les parties non infiltrées apparaissant en gris dans la figure 2a et en noir dans la figure 2b). La porosité intra-toron non-infiltrée n'est pas due à un manque de mobilité électrophorétique des particules SiC, mais plutôt à la taille des particules relativement grandes du SiC utilisé (0,9 µm). Une densité plus importante pourrait être obtenue en utilisant des particules de tailles plus petites, par exemple 0,5 µm.

Selon une variante du procédé objet de l'invention, il est possible d'élaborer un revêtement à la surface du composite en rallongeant la durée de la phase électrophorétique du procédé. Un tel revêtement est représenté dans la figure 3, dans laquelle une partie du revêtement 7 a été retiré pour découvrir la préforme infiltrée et densifiée 6 sous-jacente. Ce revêtement 7 se compose de SiC (le même SiC que celui qui est présent à l'intérieur du renfort fibreux) et réduit la rugosité de surface du composite, ce qui est bénéfique pour les applications visées puisque la présence de ce revêtement facilite un contrôle dimensionnel des pièces SiC_{f}/SiC, ainsi qu'un contrôle thermo-hydraulique des pièces.

Il est à noter que le revêtement 7 représenté dans la figure 3 n'est pas exempt de défauts (fissures, cratères). La qualité du revêtement peut toutefois être améliorée en ajoutant un liant (par exemple du polyvinylbutyral) dans la formulation de la suspension colloïdale, la qualité du revêtement étant améliorée en optimisant la quantité du liant.

L'épaisseur du revêtement dépend de la durée de la phase électrophorétique du procédé. En effet, au début de cette phase, les particules de SiC vont combler les porosités internes du renfort en fibres de SiC. C'est ensuite, au cours de cette phase, que le revêtement va progressivement se former.

Il est à noter que cet aspect revêtement n'est jamais abordé dans la littérature relative à la fabrication de composites SiC_{f}/SiC. Cela vient probablement du fait que, dans la plupart des articles traitant de la fabrication de composites SiC_{f}/SiC par électrophorèse, l'accent est mis sur la qualité de l'infiltration. De plus, jusqu'à présent, l'électrophorèse n'était utilisée que pour infiltrer la poudre de SiC servant de remplissage au sein du renfort, et non pour élaborer entièrement un composite en une seule étape. A titre de comparaison, dans le procédé SITE-P, plusieurs étapes successives d'imprégnation sous vide du polymère sont effectuées après l'étape d'électrophorèse. Avec le procédé SITE-P, un revêtement ne pouvait donc pas être élaboré avant l'étape d'imprégnation du polymère sous vide.

### REFERENCES CITEES

**[1]** Katoh et al. « A Novel Processing Technique of Silicon Carbide-Based Ceramic Composites for High Temperature Applications », Advanced SiC/SiC Ceramic Composites : Developments and Applications in EnergySystems, Volume 144 (2002), p. 77-86
**[2] S. Novak, G.Dražić, K. König et A. Iveković**
   « Preparation of SiCf/SiC composites by the slip infiltration and transient eutectoid (SITE) process », Journal of Nuclear Materials 399 (2010), p 167-174
**[3]** S. Novak et A. Iveković « Fabrication of SiCf/SiC composites by SITE-P process », Journal of Nuclear Materials, 427 (2012), p 110-115
**[4]** Greenwood R. « Review of the measurement of zeta potentials in concentrated aqueous suspensions using electroacoustics », Advances in Colloid and Interface Science 106 (2003), p. 55-81

## Revendications

1. Procédé de fabrication d'une pièce en matériau composite à matrice céramique du type SiC_{f}/SiC qui comprend un renfort fibreux SiC densifié par une matrice SiC, le procédé comprenant successivement :
a) une mise en contact d'une préforme de la pièce à fabriquer avec une dispersion colloïdale, la préforme comprenant des fibres de SiC et la dispersion colloïdale comprenant des particules de SiC de tailles submicrométriques ou nanométriques, dispersées dans au moins un solvant, et un précurseur liquide de céramique SiC ;
b) une infiltration, par électrophorèse, des particules de SiC et du précurseur de céramique SiC contenus dans la dispersion colloïdale, dans la préforme ;
c) une densification de la préforme infiltrée par traitement thermique pour décomposer le précurseur de céramique en céramique SiC, moyennant quoi on obtient la pièce en matériau composite à matrice céramique.

2. Procédé selon la revendication 1, comprenant en outre la préparation de la dispersion colloïdale, cette préparation comprenant successivement :
- la dispersion des particules de SiC dans un solvant dans lequel les particules de SiC sont dispersibles et dans lequel le précurseur liquide est soluble ; et
- la solubilisation du précurseur liquide dans ledit solvant.

3. Procédé selon la revendication 1, comprenant en outre la préparation de la dispersion colloïdale, cette préparation comprenant successivement :
- la dispersion des particules de SiC dans un mélange de deux solvants miscibles : un premier solvant dans lequel les particules de SiC sont dispersibles, et un deuxième solvant dans lequel le précurseur liquide est soluble ;
- la solubilisation du précurseur liquide dans le mélange de solvants comprenant les particules de SiC.

4. Procédé selon la revendication 3, dans lequel le premier solvant est l'éthanol et le second solvant est le toluène, les premier et deuxième solvants étant dans des proportions 55/45 en volume.

5. Procédé selon la revendication 2 ou 3, dans lequel la dispersion des particules de SiC dans le solvant dans lequel les particules de SiC sont dispersibles comprend :
- l'introduction, sous agitation, de tout ou partie des particules de SiC dans ledit solvant ;
- l'arrêt de l'agitation et l'application d'ultrasons audit solvant comprenant les particules de SiC ; et éventuellement
- l'arrêt des ultrasons et l'application d'une agitation magnétique audit solvant comprenant les particules de SiC ;
et, s'il reste des particules de SiC à introduire dans le solvant, la répétition une ou plusieurs fois de l'enchainement des opérations ci-dessus.

6. Procédé selon la revendication 2 ou 3, dans lequel la solubilisation du précurseur liquide dans le solvant dans lequel le précurseur liquide est soluble comprend :
- l'introduction, sous agitation, de tout ou partie du précurseur liquide dans ledit solvant ;
- l'arrêt de l'agitation et l'application d'ultrasons audit solvant ; et éventuellement
- l'arrêt des ultrasons et l'application d'une agitation magnétique audit solvant ;
et, s'il reste du précurseur liquide à introduire dans le solvant, la répétition une ou plusieurs fois de l'enchainement des opérations ci-dessus.

7. Procédé selon la revendication 5 ou 6, dans lequel l'application d'ultrasons est réalisée pendant une durée comprise entre 1 et 10 minutes, de préférence 5 minutes, à une puissance comprise entre 170 et 310 W et l'éventuelle application d'une agitation magnétique est réalisée en appliquant une vitesse d'agitation comprise entre 300 et 600 tours/minute pendant une durée comprise entre 30 et 90 minutes, de préférence à température ambiante.

8. Procédé selon la revendication 1, dans lequel la dispersion colloïdale comprend, en pourcentages massiques rapportés à la masse totale de la dispersion, 40 à 60% de particules de SiC, de préférence 50 à 55%.

9. Procédé selon la revendication 1, dans lequel l'étape b) d'infiltration par électrophorèse comprend l'application d'une tension entre 10 et 100 V/cm pendant une durée allant de 1 à 10 minutes.

10. Procédé selon la revendication 1, comprenant en outre, avant l'étape a), une étape de mise en contact de la préforme avec ledit au moins un solvant pendant au moins 12 heures.

11. Procédé selon la revendication 1, dans lequel l'étape c) de densification partraitement thermique comprend une pyrolyse réalisée à une température comprise entre 1400 et 1700°C et pendant une durée comprise entre 1 et 3 heures.

12. Procédé selon la revendication 11, dans lequel la température de la pyrolyse est atteinte en chauffant la préforme infiltrée à une vitesse comprise entre 0,5°C/min et 4°C/min.

13. Procédé selon la revendication 12, dans lequel la pyrolyse est réalisée à une température de 1600°C, la température de pyrolyse étant atteinte en chauffant la préforme infiltrée à une vitesse de 1°C/min.

14. Procédé selon la revendication 1, dans lequel une durée de l'étape d'infiltration est augmentée de manière à obtenir un revêtement en surface du renfort.

## Patentansprüche

1. Verfahren zur Herstellung eines Werkstücks aus Verbundmaterial mit einer Keramikmatrix vom Typ SiC_{f}/SiC, das eine SiC-Faserverstärkung verdichtet durch eine SiC-Matrix umfasst, wobei das Verfahren nacheinander die Schritte umfasst:
a) ein Inkontaktbringen einer Vorform des herzustellenden Werkstücks mit einer kolloidalen Dispersion, wobei die Vorform SiC-Fasern umfasst und die kolloidale Dispersion SiC-Partikel mit Submikrometer- oder Nanometer-Größen umfasst, die in wenigstens einem Lösungsmittel dispergiert sind, sowie einen flüssigen Präkursor von SiC-Keramik;
b) eine Infiltration der SiC-Partikel und des SiC-Keramikpräkursors, die in der kolloidalen Dispersion enthalten sind, durch Elektrophorese in die Vorform;
c) eine Verdichtung der infiltrierten Vorform durch thermische Behandlung zur Zerlegung des Keramikpräkursors in SiC-Keramik, wodurch man das Werkstück aus Verbundmaterial mit einer Keramikmatrix erhält.

2. Verfahren nach Anspruch 1, ferner umfassend die Herstellung der kolloidalen Dispersion, wobei diese Herstellung nacheinander die Schritte umfasst:
- Dispergieren der SiC-Partikel in einem Lösungsmittel, in dem die SiC-Partikel löslich sind und in dem der flüssige Präkursor löslich ist; und
- Lösen des flüssigen Präkursors in dem Lösungsmittel.

3. Verfahren nach Anspruch 1, ferner umfassend die Herstellung der kolloidalen Dispersion, wobei diese Herstellung nacheinander die Schritte umfasst:
- Dispergieren der SiC-Partikel in einer Mischung von zwei mischbaren Lösungsmitteln: einem ersten Lösungsmittel, in dem die SiC-Partikel löslich sind, und einem zweiten Lösungsmittel, in dem der flüssige Präkursor löslich ist;
- Lösen des flüssigen Präkursors in der Mischung von Lösungsmittel, umfassend die SiC-Partikel.

4. Verfahren nach Anspruch 3, bei dem das erste Lösungsmittel Ethanol ist und das zweite Lösungsmittel Toluol ist, wobei das erste und das zweite Lösungsmittel ein Volumenverhältnis 55/45 haben.

5. Verfahren nach Anspruch 2 oder 3, bei dem das Lösen der SiC-Partikel in dem Lösungsmittel, in dem die SiC-Partikel löslich sind, umfasst:
- Einbringen aller oder eines Teils der SiC-Partikel unter Umrühren in das Lösungsmittel;
- Stoppen des Umrührens und Anwenden von Ultraschall an das Lösungsmittel, umfassend die SiC-Partikel; und gegebenenfalls
- Stoppen des Ultraschalls und Anwenden eines magnetischen Umrührens bei dem Lösungsmittel, umfassend die SiC-Partikel;
und, falls in das Lösungsmittel einzubringende SiC-Partikel übrig sind, einfaches oder mehrfaches Wiederholen der obigen Kette von Arbeitsschritten.

6. Verfahren nach Anspruch 2 oder 3, bei dem das Lösen des flüssigen Präkursors in dem Lösungsmittel, in dem der flüssige Präkursor löslich ist, umfasst:
- Einbringen des gesamten oder eines Teils des flüssigen Präkursors in das Lösungsmittel unter Umrühren;
- Stoppen des Umrührens und Anwenden von Ultraschall an das Lösungsmittel; und gegebenenfalls
- Stoppen des Ultraschalls und Anwenden eines magnetischen Umrührens bei dem Lösungsmittel;
und, falls in das Lösungsmittel einzubringender flüssiger Präkursor übrig ist, die einfache oder mehrfache Wiederholung der obigen Kette von Arbeitsschritten.

7. Verfahren nach Anspruch 5 oder 6, bei dem das Anwenden von Ultraschall während einer Dauer realisiert wird, die zwischen 1 und 10 Minuten enthalten ist, vorzugsweise 5 Minuten, bei einer Leistung, die zwischen 170 und 310 W enthalten ist, und das etwaige Anwenden eines magnetischen Umrührens realisiert wird, indem man eine Umrührgeschwindigkeit anwendet, die zwischen 300 und 600 Umdrehungen/Minute enthalten ist, während einer Dauer, die zwischen 30 und 90 Minuten enthalten ist, vorzugsweise bei Umgebungstemperatur.

8. Verfahren nach Anspruch 1, bei dem die kolloidale Dispersion in Massenprozent bezogen auf die Gesamtmasse der Dispersion 40 bis 60% SiC-Partikel umfasst, vorzugsweise 50 bis 55%.

9. Verfahren nach Anspruch 1, bei dem der Schritt b) der Infiltration durch Elektrophorese das Anlegen einer Spannung zwischen 10 und 100 V/cm während einer Dauer umfasst, die von 1 bis 10 Minuten reicht.

10. Verfahren nach Anspruch 1, ferner umfassend, vor dem Schritt a), einen Schritt des Inkontaktbringens der Vorform mit dem wenigstens einen Lösungsmittel während wenigstens 12 Stunden.

11. Verfahren nach Anspruch 1, bei dem der Schritt c) des Verdichtens durch thermische Behandlung eine Pyrolyse umfasst, die bei einer Temperatur durchgeführt wird, welche zwischen 1400 und 1700°C enthalten ist, und während einer Dauer, die zwischen 1 und 3 Stunden enthalten ist.

12. Verfahren nach Anspruch 11, bei dem die Temperatur der Pyrolyse erreicht wird, indem man die infiltrierte Vorform mit einer Geschwindigkeit aufheizt, die zwischen 0,5°C/min und 4°C/min enthalten ist.

13. Verfahren nach Anspruch 12, bei dem die Pyrolyse bei einer Temperatur von 1600°C durchgeführt wird, wobei die Temperatur der Pyrolyse erreicht wird, indem man die infiltrierte Vorform bei einer Geschwindigkeit von 1°C/min aufheizt.

14. Verfahren nach Anspruch 1, bei dem eine Dauer des Infiltrationsschritts derart erhöht wird, dass eine Oberflächenbeschichtung der Verstärkung erzielt wird.

## Claims

1. Method for manufacturing a part made from a ceramic-matrix composite material of the SiC_{f}/SiC type, which comprises an SiC fibrous reinforcement densified by an SiC matrix, the method comprising successively:
a) putting a preform of the part to be manufactured in contact with a colloidal dispersion, the preform comprising SiC fibres and the colloidal dispersion comprising SiC particles of submicrometric or nanometric sizes, dispersed in at least one solvent, and a liquid SiC ceramic precursor;
b) an infiltration, by electrophoresis, of the SiC particles and of the SiC ceramic precursor contained in the colloidal dispersion, in the preform;
c) densifying the infiltrated preform by heat treatment in order to decompose the ceramic precursor into SiC ceramic, thereby the part made of ceramic-matrix composite material is obtained.

2. Method according to claim 1, further comprising the preparation of the colloidal dispersion, this preparation comprising successively:
- dispersion of the SiC particles in a solvent in which the SiC particles can be dispersed and in which the liquid precursor is soluble; and
- solubilisation of the liquid precursor in said solvent.

3. Method according to claim 1, further comprising the preparation of the colloidal dispersion, this preparation comprising successively:
- dispersion of the SiC particles in a mixture of two miscible solvents: a first solvent in which the SiC particles are dispersible, and a second solvent in which the liquid precursor is soluble;
- solubilisation of the liquid precursor in the mixture of solvents comprising the SiC particles.

4. Method according to claim 3, in which the first solvent is ethanol and the second solvent is toluene, the first and second solvents being in proportions of 55/45 by volume.

5. Method according to claim 2 or 3, in which the dispersion of the SiC particles in the solvent in which the SiC particles are dispersible comprises:
- the introduction, under agitation, of all or some of the SiC particles in said solvent;
- stoppage of the agitation and application of ultrasound to said solvent comprising the SiC particles; and optionally
- stoppage of the ultrasound and application of a magnetic agitation to said solvent comprising the SiC particles;
and, if there are still SiC particles to be introduced in said solvent, repetition of the concatenation of the above operations one or more times.

6. Method according to claim 2 or 3, in which the solubilisation of the liquid precursor in the solvent in which the liquid precursor is soluble comprises:
- the introduction, under agitation, of all or part of the liquid precursor in said solvent;
- stoppage of the application and application of ultrasound to said solvent; and optionally
- stoppage of the ultrasound and application of a magnetic agitation to said solvent;
and, if there remains any liquid precursor to be introduced into the solvent, repetition of the concatenation of the above operations one or more times.

7. Method according to claim 5 or 6, in which the ultrasound is applied for a period of between 1 and 10 minutes, preferably 5 minutes, at a power of between 170 and 310 W and the optional application of magnetic agitation is effected by applying an agitation speed of between 300 and 600 revolutions/minute for a period of between 30 and 90 minutes, preferably at ambient temperature.

8. Method according to claim 1, in which the colloidal dispersion comprises, in mass percentages with respect to the total mass of the dispersion, 40% to 60% SiC particles, preferably 50% to 55%.

9. Method according to claim 1, in which the step b) of infiltration by electrophoresis comprises the application of a voltage at between 10 and 100 V/cm for a period ranging from 1 to 10 minutes.

10. Method according to claim 1, further comprising, before step a), a step of putting the preform in contact with said at least one solvent for at least 12 hours.

11. Method according to claim 1, in which step c) of densifying by heat treatment comprises pyrolysis carried out at a temperature of between 1400° and 1700°C and for a period of between 1 and 3 hours.

12. Method according to claim 11, in which the temperature of the pyrolysis is achieved by heating the infiltrated preform at a rate of between 0.5°C/min and 4°C/min.

13. Method according to claim 12, in which the pyrolysis is carried out at a temperature of 1600°C, the pyrolysis temperature being achieved by heating the infiltrated preform at a rate of 1°C/min.

14. Method according to claim 1, in which a duration of the infiltration step is increased so as to obtain a surface coating of the reinforcement.
